(19) **Europäisches Patentamt / European Patent Office / Office européen des brevets**

(11) **EP 4 696 411 A1**

(12) **EUROPEAN PATENT APPLICATION**

(43) Date of publication:
**18.02.2026 Bulletin 2026/08**

(21) Application number: **24195008.8**

(22) Date of filing: **16.08.2024**

(51) International Patent Classification (IPC):
**B01J 21/04** (2006.01)    **B01D 53/94** (2006.01)
**B01J 23/40** (2006.01)

(52) Cooperative Patent Classification (CPC):
**B01J 21/04; B01D 53/945; B01J 23/40;**
B01D 2255/1021; B01D 2255/1023;
B01D 2255/1025; B01D 2255/2042;
B01D 2255/2063; B01D 2255/2065;
B01D 2255/20715; B01D 2255/2092;
B01D 2255/407; B01D 2255/9022; B01D 2255/908;
B01D 2258/014

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Johnson Matthey Public Limited Company**
**London EC2V 7AD (GB)**

(72) Inventors:
• ZHANG, Xiaorui
  **Sakura Shi, 329-1412 (JP)**
• NAGAOKA, Shuhei
  **Sakura Shi, 329-1412 (JP)**

(74) Representative: **Johnson Matthey Plc**
**Intellectual Property Department**
**Belasis Avenue**
**Billingham TS23 1LB (GB)**

(54) **CATALYST ARTICLE FOR TREATING EXHAUST GAS, ITS METHOD OF MANUFACTURE AND USES THEREOF**

(57)    Provided is a catalyst article for treating exhaust gas, the catalyst article comprising a substrate and at least a first catalytic region disposed on the substrate, wherein the first catalytic region comprises: an oxygen storage capacity (OSC) material; and an alumina support material having at least one platinum group metal (PGM) supported thereon; wherein the alumina support material comprises alpha alumina.

**EP 4 696 411 A1**

**Description**

FIELD OF THE INVENTION

This disclosure relates to a catalyst article for the treatment of an exhaust gas. In particular the disclosure relates to a TWC catalyst for treating exhaust gas from an internal combustion engine.

BACKGROUND OF THE INVENTION

A three-way catalyst (TWC) typically contains one or more platinum group metals (PGMs), particularly those selected from the group consisting of platinum, palladium and rhodium.

TWCs are intended to catalyse three reactions simultaneously:

(i) oxidation of carbon monoxide to carbon dioxide,

(ii) oxidation of unburned hydrocarbons to carbon dioxide and water; and

(iii) reduction of nitrogen oxides to nitrogen and oxygen.

These three reactions occur most efficiently when the TWC receives exhaust gas from an engine running at or about the stoichiometric point. As is well known in the art, the quantity of carbon monoxide (CO), unburned hydrocarbons (HC) and nitrogen oxides ($NO_x$) emitted when gasoline fuel is combusted in a positive ignition (e.g. spark-ignited) internal combustion engine is influenced predominantly by the air-to-fuel ratio in the combustion cylinder. An exhaust gas having a stoichiometrically balanced composition is one in which the concentrations of oxidising gases ($NO_x$ and $O_2$) and reducing gases (HC, $H_2$ and CO) are substantially matched. The air-to-fuel ratio that produces this stoichiometrically balanced exhaust gas composition is typically given as 14.7:1.

The active components in a typical TWC comprise one or more PGMs supported on a high surface area oxide, and an oxygen storage component.

When the exhaust gas composition is slightly rich of the set point, there is a need for a small amount of oxygen to consume the unreacted CO and HC, i.e. to make the reaction more stoichiometric. Conversely, when the exhaust gas goes slightly lean, the excess oxygen needs to be consumed. This was achieved by the development of the oxygen storage component that liberates or absorbs oxygen during the perturbations. The most commonly used oxygen storage component in modern TWCs is cerium oxide ($CeO_2$) or a mixed oxide containing cerium, e.g. a Ce/Zr mixed oxide.

In conventional modern TWCs, the "high surface area oxide" is typically a gamma alumina-based material, such as a gamma alumina further stabilised with a rare earth element such as lanthanum. This is because it has been the understanding in the field for many years that having a high surface area support material, such as gamma alumina, can provide excellent dispersion of the PGM on the support material, which provides more PGM active sites for catalysing the TWC reactions, thereby providing improved catalytic activity. However, a problem with gamma alumina is that its high-temperature thermal stability is not high. As such, stabilised gamma alumina support materials have been developed, such as lanthanum-doped gamma alumina support materials, which provide the gamma alumina with higher thermal stability while advantageously maintaining the high surface area of the support material, for the reasons above. Typical stabilised gamma alumina support materials may have a BET surface area of greater than 150 or even 200 $m^2/g$, for example. Such a support material may also reduce the amount of sintering of the PGM supported thereon after high temperature ageing, which is thought to reduce the activity of the PGM particles.

The use and development of such stabilised gamma alumina support materials is well known in the field of the present invention, and a suitable summary of the reasons for this may be found in, for example, US 2006/257305 A1.

However, there is a continuing desire to further improve the known alumina-based support materials to improve the catalytic activity in TWC applications, in particular after high-temperature ageing.

SUMMARY OF THE INVENTION

One aspect of the present disclosure is directed to a catalyst article for treating exhaust gas, the catalyst article comprising a substrate and at least a first catalytic region disposed on the substrate, wherein the first catalytic region comprises: an oxygen storage capacity (OSC) material; and an alumina support material having at least one platinum group metal (PGM) supported thereon; wherein the alumina support material comprises alpha alumina.

Another aspect of the present disclosure is directed to a method of manufacturing a catalyst article for treating exhaust gas, the method comprising: providing a substrate; providing a washcoat slurry comprising an OSC material, an alumina support material and at least one PGM, wherein the alumina support material comprises alpha alumina; and

coating the substrate with the washcoat slurry to provide a catalyst article.

Another aspect of the present disclosure is directed to a catalyst article obtained or obtainable by the method of the above aspect.

Another aspect of the present disclosure is directed to a use of alpha alumina as a support material for Rh in a catalyst article to reduce the total hydrocarbon (THC), CO and/or NOx light-off temperature of the catalyst article.

Another aspect of the present disclosure is directed to a use of alpha alumina as a support material for Pd in a catalyst article to increase the CO and/or $NO_x$ conversion of the catalyst article at a temperature of from 300 to 500°C.

Another aspect of the present disclosure is directed to a use of alpha alumina as a support material for Pt in a catalyst article to reduce the $NH_3$ light-off temperature of the catalyst article.

Another aspect of the present disclosure is directed to a use of alpha alumina as a support material for Pt in a catalyst article to increase the $N_2$ selectivity of the catalyst article.

Another aspect of the present disclosure is directed to an emission treatment system comprising the catalyst article of the above aspect.

Another aspect of the present disclosure is directed to a method of treating an exhaust gas, the method comprising: providing the catalyst article of the above aspect; and contacting the catalyst article with an exhaust gas.

BRIEF DESCRIPTION OF THE DRAWINGS

FIG. 1 shows THC, CO and $NO_x$ conversion results from Example 1.

FIG. 2 shows CO and $NO_x$ conversion results from Example 2.

FIG. 3 shows CO and $NO_x$ conversion results from Example 2.

FIG. 4 shows CO and $NO_x$ conversion results from Example 2.

FIG. 5 shows CO and $NO_x$ conversion results from Example 2.

FIG. 6 shows THC and $NO_x$ conversion results from Example 2.

FIG. 7 shows THC and $NO_x$ conversion results from Example 2.

DETAILED DESCRIPTION OF THE INVENTION

The present invention seeks to tackle at least some of the problems associated with the prior art or at least to provide a commercially acceptable alternative solution thereto.

In a first aspect, provided is a catalyst article for treating exhaust gas, the catalyst article comprising a substrate and at least a first catalytic region disposed on the substrate, wherein the first catalytic region comprises:

an oxygen storage capacity (OSC) material; and
an alumina support material having at least one platinum group metal (PGM) supported thereon;
wherein the alumina support material comprises alpha alumina.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Surprisingly, in contrast to the convention to improve catalytic activity of TWCs even after being subjected to high-temperature ageing by improving the thermal stability of the high surface area alumina species such as gamma and theta alumina, the inventors of the present invention have found that replacing the high surface area alumina species of modern TWCs with alpha alumina as the support material for the PGMs, in combination with the use of OSC materials in the catalytic region, can provide a catalyst article having improved HC, CO and $NO_x$ conversion after high temperature ageing. This improvement is compared to the use of gamma or theta alumina to support the PGM, in particular after lean-oriented ageing of the catalyst articles. Unexpectedly, this improvement may be observed even after medium to longer ageing times, such as 4-40 hours at 1000°C, which may be particularly useful when the catalyst article is located in the close-coupled position (which experiences high temperatures). In other words, the inventors have surprisingly found that an improvement in catalytic activity after ageing occurs compared to the use of gamma and/or theta alumina support

EP 4 696 411 A1

materials.

Alpha alumina is known to have been investigated previously for its use as a support material in a TWC catalyst. However, for the last few decades, gamma alumina has typically been the focus of alumina-based support materials in TWC applications for the reasons outlined above (i.e., high surface area). Before this time, when alpha alumina species were investigated, the alpha alumina was typically formed *in situ* from thermal decomposition of higher surface area alumina species, such as gamma or delta alumina, to form the alpha alumina prior to addition of the PGM. In other words, a washcoat of gamma or delta alumina would be formed on the substrate, the washcoat would be calcined and thermally treated to form the alpha alumina *in situ,* prior to adding the PGM. However, such outdated methods would not be suitable for and are not compatible with forming a complete, modern TWC catalyst article, which further comprises an OSC material, for example (especially if one wishes to fix the PGMs to the alumina only, for example). This is because the harsh thermal treatment to form the alpha alumina from the gamma or delta alumina would also deactivate the OSC material that is also present in the catalytic region. Moreover, such methods may not be commercially viable as they involve using large amounts of energy and may therefore be very costly. These investigations are therefore outdated.

As is known to the skilled reader, the OSC material is essential in such modern TWC formulations to, *inter alia,* increase the high temperature HC, CO and $NO_x$ conversion and lower the light-off temperature of the catalyst article. In the absence of such OSC materials, the catalytic activity will typically drop off again at higher temperatures, such as above 400°C.

Our inventors have found that, surprisingly, the use of alpha alumina in such modern TWC articles may improve the aged HC, CO and $NO_x$ catalytic activity of the catalyst article compared to the use of gamma or theta alumina as in conventional modern TWC articles. As such, advantageously, it may also be possible to reduce the total loading of such expensive PGMs while still achieving the same level of catalytic activity as conventional catalyst articles.

Without wishing to be bound by theory, it is thought that this improvement in catalytic activity after ageing may be due to the PGMs remaining more on the surface of the alpha alumina compared to, for example, gamma alumina, meaning that after ageing the PGM particles remain on the surface of the alpha alumina, rather than being incorporated into the bulk, for example. By contrast, the conventional approach to alumina support materials for TWC applications teaches that high surface area of the alumina support material, leading to high dispersion of the PGMs, is the main factor in providing improved catalytic activity, with improved performance after ageing being provided by stabilisation of the high surface area support material to thermal decomposition. Previous research has also been directed to improvements by increasing the specific surface area of gamma alumina.

The alumina support material has at least one PGM supported thereon. Of course, other species may be supported on the alumina support material. However, preferably, only the at least one PGM is supported on the alumina support material.

Typically, substantially no PGM is supported on the OSC material. Preferably, 1 wt.% or less PGM is supported on the OSC material, more preferably 0.1 wt.% or less PGM is supported on the OSC material, more preferably 0.01 wt.% or less PGM is supported on the OSC material, even more preferably 0.001 wt.% or less PGM is supported on the OSC material, still more preferably 0.0001 wt.% or less PGM is supported on the OSC material, based on the total weight of the OSC material, and still more preferably the OSC material is free of PGM supported thereon. In other words, the PGM is preferably pre-fixed onto the alumina support material and not the OSC material (though it may be that some PGM is unavoidably supported on the OSC material).

Typically, substantially all of the total PGM present in the first catalytic region is supported on the alumina support material. Preferably, at least 95 wt.% of the total PGM present in the first catalytic region is supported on the alumina support material, more preferably at least 97 wt.% of the total PGM present in the first catalytic region is supported on the alumina support material, even more preferably at least 99 wt.% of the total PGM present in the first catalytic region is supported on the alumina support material, still more preferably at least 99.9 wt.% of the total PGM present in the first catalytic region is supported on the alumina support material.

Typically, substantially all of the total PGM supported on the alumina support material is supported on the surface of the alumina support material. Preferably, at least 90 wt.% of the total PGM supported on the alumina support material is supported on the surface of the alumina support material, more preferably at least 95 wt.% of the total PGM supported on the alumina support material is supported on the surface of the alumina support material, more preferably at least 97 wt.% of the total PGM supported on the alumina support material is supported on the surface of the alumina support material, even more preferably at least 99 wt.% of the total PGM supported on the alumina support material is supported on the surface of the alumina support material, still more preferably at least 99.9 wt.% of the total PGM supported on the alumina support material is supported on the surface of the alumina support material.

Preferably, the alumina support material comprises at least 50 wt.% alpha alumina, more preferably at least 70 wt.% alumina, even more preferably at least 90 wt.% alpha alumina, still more preferably at least 95 wt.% alpha alumina, still more preferably at least 99 wt.% alpha alumina, based on the total weight of the alumina support material. The remaining content of the alumina support material may comprise other phases of alumina, such as, for example, gamma and/or theta alumina. Preferably, the alumina support material consists essentially of, preferably consists of alpha

4

alumina. The species "alpha alumina" is well understood by the skilled reader. In particular, alpha alumina is typically trigonally (nearly hexagonal close-packed) structured whereas gamma alumina typically has a cubic structure and theta alumina is typically monoclinic. The alpha, theta and gamma alumina phases are well understood by the skilled reader. Alpha alumina is the most thermodynamically stable form of alumina.

Preferably, the alpha alumina is substantially free of PGMs incorporated into the bulk thereof. The term "substantially free of' in this context may encompass less than 1 wt.% total PGM, less than 0.1 wt.% total PGM, less than 0.01 wt.% total PGM, less than 0.001 wt.% total PGM, or less than 0.0001 wt.% total PGM incorporated into the bulk of the alpha alumina, based on the total weight of the alpha alumina. Any suitable analytical technique known to the skilled reader may be used to measure these percentages. Preferably, the alpha alumina is free of PGMs incorporated into the bulk thereof. In other words, the alumina support material is preferably not formed of an alumina support material formed by thermal decomposition of a gamma alumina material that had PGM supported within its pores.

It will be appreciated that "alumina support material" does not encompass any alumina present as, for example, a binder. Further alumina species may also be present. The alpha alumina may be doped, but preferably the alumina support material is not doped. Other alumina species used as support materials, such as gamma alumina, are known to be doped with rare earth elements, such as La, to improve the thermal stability thereof. However, this may not be necessary for alpha alumina. In fact, gamma alumina is typically doped with La in order to limit its conversion to alpha alumina after high temperature ageing. Moreover, without wishing to be bound by theory, it is though that the La may form a perovskite structure with the PGM, such as Rh, deactivating the PGM's catalytic activity towards the pollutants in the exhaust gas. As such, in the present invention a large amount of La in the alumina support material should preferably be avoided, particularly when the at least one PGM comprises Rh.

Preferably, the alpha alumina (alumina support material) has a BET surface area of from 1 to 15 $m^2/g$, more preferably from 2 to 10 $m^2/g$, even more preferably from 3 to 7 $m^2/g$, still more preferably from 4 to 6 $m^2/g$. This can be measured using techniques known in the art. As described herein, it has surprisingly been found that such low surface area, and thermally stable, alpha alumina support materials can be used to provide improved catalytic activity, even after ageing. This goes against the current convention in the field of the present invention, which is that improving the thermal stability of high surface area alumina support materials, such as gamma alumina, may be the best way to modify existing alumina support materials in order to improve their catalytic activity after being subjected to high-temperature ageing. The alpha alumina (alumina support material) may typically substantially retain such a BET surface area after high-temperature ageing, such as at 1000°C for 4 hours in air.

Preferably, the alumina support material is present in the form of particles. Preferably, the particles of the alumina support material have a D50 of from 10 to 100 $\mu$m, more preferably from 20 to 80 $\mu$m, even more preferably from 30 to 70 $\mu$m, still more preferably from 40 to 60 $\mu$m. The D50 may be measured by Laser Diffraction Particle Size Analysis using a Malvern Mastersizer 2000, which is a volume-based technique (i.e. D50 may also be referred to as Dv50 (or D(v,0.50))) and applies a mathematical Mie theory model to determine a particle size distribution. The laser diffraction system works by determining diameters for the particles based on a spherical approximation. Diluted washcoat samples may be prepared by sonication in distilled water without surfactant for 30 seconds at 35 watts.

Preferably, the at least one PGM comprises one or more of Rh, Pt and Pd. Preferably, the at least one PGM comprises Rh, and one or both of Pd and Pt.

Preferably, the at least one PGM comprises Rh and the Rh is supported on the alumina support material in an amount of from 0.01 to 1 wt.%, preferably from 0.05 to 0.5 wt.%, more preferably from 0.1 to 0.4 wt.%, even more preferably from 0.015 to 0.35 wt.%, even more preferably from 0.018 to 0.27 wt.%, even more preferably from 0.20 to 0.25 wt.%, even more preferably from 0.022 to 0.24 wt.%, based on the total weight of the alumina support material and the Rh. In one preferred embodiment, the at least one PGM consists of Rh. Preferably, the catalyst article comprises from 0.5 to 15 $g/ft^3$, preferably from 1 to 5 $g/ft^3$ of the Rh, based on the total volume of the substrate. It may be possible to use lower Rh loadings compared to conventional catalyst articles using gamma alumina due to the increased activity that may be achieved after ageing.

Preferably, the at least one PGM comprises Pd and the Pd is supported on the alumina support material in an amount of from 0.01 to 5 wt.%, preferably from 0.1 to 4 wt.%, more preferably from 0.5 to 3.5 wt.%, even more preferably from 1 to 3 wt.%, still more preferably from 1.1 to 2.5 wt.%, based on the total weight of the alumina support material and the Pd. In one preferred embodiment, the at least one PGM consists of Pd. Preferably, the catalyst article comprises from 10 to 100 $g/ft^3$ of the Pd, based on the total volume of the substrate. It may be possible to use lower Pd loadings compared to conventional catalyst articles using gamma alumina due to the increased activity that may be achieved after ageing.

Preferably, the at least one PGM comprises Pt and the Pt is supported on the alumina support material in an amount of from 0.01 to 5 wt.%, preferably from 0.05 to 3 wt.%, more preferably from 0.1 to 1 wt.%, even more preferably from 0.12 to 0.5 wt.%, still more preferably from 0.14 to 0.3 wt.%, still more preferably from 0.16 to 0.20 wt.%, based on the total weight of the alumina support material and the Pt. In one preferred embodiment, the at least one PGM consists of Pt. Preferably, the catalyst article comprises from 1 to 100 $g/ft^3$, preferably from 5 to 80 $g/ft^3$ of the Pt, based on the total volume of the substrate. It may be possible to use lower Pt loadings compared to conventional catalyst articles using gamma alumina due to the increased activity that may be achieved after ageing.

Preferably, the first catalytic region comprises from 1 to 50 wt.%, preferably from 5 to 40 wt.%, more preferably from 10 to 35 wt.%, even more preferably from 20 to 30 wt.%, even more preferably from 24 to 26 wt.% of the alumina support material, based on the total weight of the first catalytic region. For the purpose of this calculation, the weight of the "alumina support material" does not include the additional weight of any PGM supported thereon.

Preferably, the first catalytic region comprises from 1 to 50 wt.%, preferably from 5 to 40 wt.%, more preferably from 10 to 35 wt.%, even more preferably from 20 to 30 wt.%, even more preferably from 24 to 26 wt.% of the OSC material, based on the total weight of the first catalytic region.

Preferably, the ratio by weight of the OSC material to the alumina support material in the first catalytic region is from 30:70 to 70:30, more preferably from 40:60 to 60:40, even more preferably about 50:50. For the purpose of this calculation, the weight of the "alumina support material" does not include the additional weight of any PGM supported thereon.

Preferably, the first catalytic region comprises from 0.1 to 3 g/in$^3$, more preferably from 0.3 to 1.5 g/in$^3$, even more preferably from 0.5 to 1 g/in$^3$, even more preferably about 0.8 g/in$^3$ of the OSC material, based on the total volume of the substrate.

Preferably, the first catalytic region comprises from 0.1 to 3 g/in$^3$, more preferably from 0.3 to 1.5 g/in$^3$, even more preferably from 0.5 to 1 g/in$^3$, even more preferably about 0.8 g/in$^3$ of the alumina support material, based on the total volume of the substrate. For the purpose of this calculation, the weight of the "alumina support material" does not include the additional weight of any PGM supported thereon.

Preferably, the OSC material comprises ceria, preferably a ceria-zirconia mixed oxide. Preferably, the ceria-zirconia mixed oxide comprises a doped ceria-zirconia mixed oxide. Preferably, the doped ceria-zirconia mixed oxide is doped with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably an oxide of one or more of lanthanum, neodymium, yttrium and praseodymium. Preferably, the dopant is present in the doped ceria-zirconia mixed oxide in an amount of from 0.001 wt.% to 20 wt.%, preferably from 0.5 wt.% to 10 wt.%, based on the total weight of the doped ceria-zirconia mixed oxide.

Preferably, the first catalytic region further comprises a binder. Suitable binders are known to the skilled person. The binder preferably comprises a further alumina species, such as alumina or an alumina sol. Preferably, the first catalytic region comprises from 0.01 to 0.2 g/in$^3$, more preferably from 0.02 to 1.7 g/in$^3$, even more preferably from 0.03 to 1.5 g/in$^3$, still more preferably from 0.04 to 1.3 g/in$^3$, still more preferably from 0.05 to 1.2 g/in$^3$, still more preferably from 0.06 to 1.0 g/in$^3$ of the binder, based on the total volume of the substrate.

Preferably, the substrate comprises a wall flow filter substrate. In an alternative preferred embodiment, the substrate comprises a flow-through substrate. Preferably, the substrate comprises cordierite. However, the composition of the substrate is not particularly limited. The substrate may be a "blank", i.e. un-washcoated, substrate. Alternatively, the substrate may have one or washcoats already loaded thereon. In such a situation, the final catalyst article may comprise multiple layers of different washcoats.

Preferably, the OSC material comprises particles having a D90 of from 0.1 to 25 μm, preferably from 0.5 to 15 μm. The term "D90" as used herein may encompass the value in the size distribution, up to and including which, 90% of the total volume of material in the sample is 'contained'. The D90 may be measured by Laser Diffraction Particle Size Analysis using a Malvern Mastersizer 2000, which is a volume-based technique (i.e. D90 may also be referred to as Dv90 (or D(v,0.90))) and applies a mathematical Mie theory model to determine a particle size distribution. The laser diffraction system works by determining diameters for the particles based on a spherical approximation. Diluted washcoat samples may be prepared by sonication in distilled water without surfactant for 30 seconds at 35 watts.

Preferably, the catalyst article is a three-way catalyst article and the at least one PGM comprises Rh and/or Pd, preferably Rh.

Preferably, the catalyst article is an ammonia-slip catalyst and the at least one PGM comprises Pt and/or Pd, preferably Pt.

The catalyst article preferably further comprises one or more further catalytic regions, such as second, third etc. catalytic regions. The one or more further catalytic regions may be different to the first catalytic region described herein and required by the invention. For example, the one or more further catalytic regions may be any suitable further catalytic region known to the skilled person. In particular, it is preferred that the one or more further catalytic regions comprise one or more catalytic regions for three-way catalysis. Preferably, one or more of the further catalytic regions comprise platinum, palladium and/or rhodium, preferably platinum and/or palladium. The platinum and/or palladium may be supported on a support material. Suitable support materials are known in the art.

In some preferred embodiments, the catalyst article comprises a substrate, the first catalytic region described herein and a second catalytic region. In other words, the catalyst article preferably further comprises a second catalytic region. The second catalytic region preferably has a different composition to that of the first catalytic region. Preferably, the second catalytic region comprises a PGM supported on a support material, and optionally one or more of a binder and a promoter. The PGM preferably comprises palladium and/or rhodium, preferably palladium. The support material preferably comprises alumina and/or a ceria zirconia mixed oxide. The binder preferably comprises alumina. The promoter preferably comprises barium and/or manganese.

The first catalytic region may be disposed on, preferably directly on, the second catalytic region. For example, the second catalytic region may be disposed directly on the substrate and the first catalytic region may be disposed directly on the second catalytic region. In these embodiments, the first and second catalytic regions are preferably washcoat layers, and the washcoat layers are each preferably applied over the entire length of the substrate. Alternatively, the first and second washcoat layers (corresponding to the first and second catalytic regions, respectively) may be coated over, for example, up to 80% of the substrate length from each end, respectively.

In an alternative embodiment, the catalyst article comprises a substrate, the first catalytic region described herein, a second catalytic region and a third catalytic region. In other words, the catalyst article may further comprise a second catalytic region and a third catalytic region. The second and third catalytic regions preferably have different compositions to that of the first catalytic region. Moreover, the second catalytic region preferably has a different composition to that of the third catalytic region.

The second catalytic region in this embodiment may be as described in the above embodiment. In this embodiment the first and third catalytic regions may be disposed on, preferably directly on, the second catalytic region in the form of zones. In particular, the second catalytic region is preferably disposed directly on the substrate, and the first and third catalytic regions are preferably each disposed directly on the second catalytic region. The second catalytic region is preferably disposed on the entire length of the substrate and the first and third catalytic regions are preferably disposed in the form of zones on the second catalytic region. In these embodiments, the first, second and third catalytic regions are preferably in the form of washcoat layers.

In these embodiments, the first catalytic region may be the rear zone, i.e. located at the intended outlet end of the catalyst article, and the third catalytic region may be the front zone, i.e. located at the intended inlet end of the catalyst article.

The third catalytic region may comprise rhodium supported on a support material. The support material is preferably alumina and/or a ceria-zirconia mixed oxide as described herein.

When the first and third catalytic regions are zoned, the two zones together are preferably applied over the entire length of the substrate, which is preferably the entire length of the second catalytic region.

Preferably, the first catalytic region is a single washcoat layer disposed on the substrate. The single washcoat layer may be coated along the entire length of the substrate, or over only a portion thereof. For example, preferably, the single washcoat layer is coated from one end (e.g. the inlet end or the outlet end in terms of the direction of intended use in an exhaust system) of the substrate, preferably coating less than 90%, less than 80%, less than 70%, less than 60%, less than 50%, less than 40%, less than 30%, less than 20%, or less than 10% of the length of the substrate. Preferably, the single washcoat layer is coated directly on the substrate. In an alternative preferred embodiment, there is one or more intervening washcoat layers located between the single washcoat layer of the invention and the substrate. The one or more intervening washcoat layers in this embodiment may be any suitable washcoat layer known to the skilled person. Preferably, the one or more intervening washcoat layers may be suitable for three-way catalysis. In other words, the catalyst article preferably further comprises one or more further washcoat layers.

In a further aspect, provided is a method of manufacturing a catalyst article for treating exhaust gas, the method comprising:

providing a substrate;

providing a washcoat slurry comprising an OSC material, an alumina support material and at least one PGM, wherein the alumina support material comprises alpha alumina; and

coating the substrate with the washcoat slurry to provide a catalyst article.

The preferred embodiments and advantages of the first aspect apply equally this aspect. Such a method may avoid the disadvantages discussed herein in relation to forming the alpha alumina *in situ.*

The washcoat slurry typically further comprises water.

Preferably, the method further comprises calcining the catalyst article. Calcining the catalyst article preferably comprises heating the catalyst article at a temperature of from 400 to 600°C for from 5 to 60 minutes, preferably in a static oven. The heating may be carried out in air or in an inert atmosphere, typically in air. If not already fixed, without wishing to be bound by theory the calcination step may fix the at least one PGM to at least the alumina support material.

In one preferred embodiment, providing the washcoat slurry comprises:

providing the OSC material;

providing the alumina support material, wherein the alumina support material comprises the at least one PGM supported thereon; and

preparing a washcoat slurry comprising the OSC material and the alumina support material comprising the at least one PGM supported thereon. In other words, the at least one PGM is preferably already supported (e.g. fixed) on the alumina support material, specifically, prior to contacting the OSC material and the alumina support material. That is, the at least one PGM is preferably pre-fixed on the alumina support material that is incorporated into the washcoat slurry. Preferably, providing the alumina support material, wherein the alumina support material comprises the at least one PGM supported thereon, comprises:

providing the alumina support material;

contacting the alumina support material with ions of the at least one PGM, preferably in an aqueous suspension; and

calcining the alumina support material to fix particles of the at least one PGM to the alumina support material.

In an alternative preferred embodiment, providing the washcoat slurry comprises providing a slurry comprising the OSC material, the alumina support material and ions of the at least one PGM. The slurry is typically an aqueous suspension.

Preferably, the washcoat slurry further comprises a binder.

Coating the substrate with the washcoat slurry may be carried out using techniques known in the art. Typically, the washcoat slurry may be poured into the inlet of the substrate using a specific moulding tool in a predetermined amount, thereby coating the washcoat slurry on the substrate. Alternatively, coating the substrate with the washcoat slurry may be carried out by immersing the substrate in the washcoat slurry. Subsequent vacuum and/or air gun/knife and/or drying steps may be employed during the coating step. When the substrate is a filter block, the washcoat slurry may be coated on the filter walls, within the filter walls (if porous) or both.

Preferably, the catalyst article is according to the first aspect.

In a further aspect, provided is a catalyst article obtained or obtainable by the method of any of the above aspect.

In a further aspect, provided is a use of alpha alumina as a support material for Rh in a catalyst article to reduce the total hydrocarbon (THC), CO and/or $NO_x$ light-off temperature of the catalyst article. The total hydrocarbon (THC), CO and/or $NO_x$ light-off temperature of the catalyst article may be reduced in comparison to a corresponding catalyst article in which the alumina support material is replaced with gamma and/or theta alumina, for example. Preferably, the use is to reduce the total hydrocarbon (THC), CO and/or $NO_x$ light-off temperature of the catalyst article when the catalyst article has been aged, such as in comparison to a corresponding catalyst article in which the alumina support material is replaced with gamma and/or theta alumina and that has also been aged under the same conditions, for example. The ageing conditions may comprise heating to a temperature of 1000°C for 4 hours.

In a further aspect, provided is a use of alpha alumina as a support material for Pd in a catalyst article to increase the CO and/or $NO_x$ conversion of the catalyst article at a temperature of from 300 to 500°C. The CO and/or $NO_x$ conversion of the catalyst article at a temperature of from 300 to 500°C may be increased in comparison to a corresponding catalyst article in which the alumina support material is replaced with gamma and/or theta alumina, for example. Preferably, the use is to increase the CO and/or $NO_x$ conversion of the catalyst article at a temperature of from 300 to 500°C when the catalyst article has been aged, such as in comparison to a corresponding catalyst article in which the alumina support material is replaced with gamma and/or theta alumina and that has also been aged under the same conditions, for example. The ageing conditions may comprise heating to a temperature of 1000°C for 4 hours.

In a further aspect, provided is a use of alpha alumina as a support material for Pd in a catalyst article to increase the THC and/or $NO_x$ conversion of the catalyst article in rich conditions. In the context of this use, "rich conditions" may encompass air:fuel ratios having a lambda value of <1. This may be particularly seen at temperatures lower than 400°C. The THC and/or $NO_x$ conversion of the catalyst article in rich conditions may be increased in comparison to a corresponding catalyst article in which the alumina support material is replaced with gamma and/or theta alumina, for example. Preferably, the use is to increase the THC and/or $NO_x$ conversion of the catalyst article in rich conditions when the catalyst article has been aged, such as in comparison to a corresponding catalyst article in which the alumina support material is replaced with gamma and/or theta alumina and that has also been aged under the same conditions, for example. The ageing conditions may comprise heating to a temperature of 1000°C for 4 hours.

In a further aspect, provided is a use of alpha alumina as a support material for Pt in a catalyst article to reduce the $NH_3$ light-off temperature of the catalyst article. In the context of this use, the "light-off temperature" may be understood as the temperature at which 50% conversion of the particular pollutant, i.e. $NH_3$, is reached (also known as the "T50"), as is well understood by the skilled reader. The $NH_3$ light-off temperature of the catalyst article may be reduced in comparison to a corresponding catalyst article in which the alumina support material is replaced with gamma and/or theta alumina, for example. Preferably, the use is to reduce the $NH_3$ light-off temperature of the catalyst article when the catalyst article has been aged, such as in comparison to a corresponding catalyst article in which the alumina support material is replaced with gamma and/or theta alumina and that has also been aged under the same conditions, for example. The ageing conditions may comprise heating to a temperature of 850°C for 4 hours or even 40 hours.

In a further aspect, provided is a use of alpha alumina as a support material for Pt in a catalyst article to increase the $N_2$ selectivity of the catalyst article. The term "$N_2$ selectivity" as used herein may encompass the selectivity of the catalyst article towards producing $N_2$ from $NO_x$, which can be measured by the relative amount of $N_2$ that is present in the exhaust gas after treatment by the catalyst article. The $N_2$ selectivity may be increased in comparison to a corresponding catalyst article in which the alumina support material is replaced with gamma and/or theta alumina, for example. Preferably, the use is to increase the $N_2$ selectivity of the catalyst article when the catalyst article has been aged, such as in comparison to a corresponding catalyst article in which the alumina support material is replaced with gamma and/or theta alumina and that has also been aged under the same conditions, for example. The ageing conditions may comprise heating to a temperature of 850°C for 4 hours or even 40 hours.

Preferably, in the uses of the above aspects, the catalyst article is as described herein.

In a further aspect, provided is an emission treatment system comprising the catalyst article as described herein. Preferably, the emission treatment system is for a gasoline engine. Preferably, the gasoline engine operates under stoichiometric conditions or perturbated rich-stoichiometric-lean conditions.

Preferably, the catalyst article is configured to be in a close-coupled position to the engine. By "close-coupled" it is meant that the catalyst article is for installation in close proximity to the exhaust manifold of an engine. That is, preferably the catalyst article is for installation in the engine bay and not on the underfloor of the vehicle. Preferably the catalyst article is the first catalyst article provided downstream of the engine manifold. The close-coupled position is very hot due to proximity to the engine. However, in comparison to catalyst articles having gamma alumina as a support material, the catalyst article of the invention may be able to better withstand these conditions, due to its ability to retain good catalytic activity after high-temperature ageing.

In a further aspect, provided is a method of treating an exhaust gas, the method comprising: providing the catalyst article described herein; and contacting the catalyst article with an exhaust gas. Preferably, the exhaust gas is from a gasoline engine. Preferably, the gasoline engine operates under stoichiometric conditions or perturbated rich-stoichiometric-lean conditions.

Definitions

The term "catalyst article" used herein may encompass an article in which a catalyst is supported thereon or therein. The article may take the form of, for example, a honeycomb monolith, or a filter, e.g. a wall flow filter or a flow-through filter.

The term "substrate" as used herein may encompass, for example, a ceramic or metallic honeycomb, or a filter block, *e.g.* a wall flow filter or flow-through filter. The substrate may comprise a ceramic monolithic substrate. The substrate may vary in its material composition, size and configuration, cell shape and density, and wall thickness. Suitable substrates are known in the art.

The term "catalytic region" as used herein may encompass an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

It is preferable that the "catalytic region" has a substantially uniform composition (i.e. there is no substantial difference in the composition of the washcoat when comparing one part of the region with another part of that region, on average). Substantially uniform composition in this context refers to a material (*e.g.,* region) where the difference in composition when comparing one part of the region with another part of the region is 5% or less, usually 2.5% or less, and most commonly 1% or less.

The first catalytic region is disposed on the substrate. The term "disposed on" in the context of this aspect may encompass both having the catalytic region directly disposed on the substrate, i.e. with no intervening material, and/or indirectly disposed on the substrate, i.e. with intervening material. If the substrate is porous, then the term "disposed on" may also encompass having the catalytic region disposed therein, for example within the pores of the substrate, i.e. wherein the catalytic region is disposed thereon and/or therein.

The term "washcoat" as used herein is well-known in the field and refers to an adherent coating that is applied to a substrate usually during the production of a catalyst. Preferably, the first catalytic region is a washcoat layer.

The term "support material", in general, as used herein may encompass any known support material that may be used to support PGMs in the field of the present invention, typically in powder form.

The relative terms "first", "second", etc. as used herein are simply labels used in order to distinguish the layers and are not intended to indicate the relative arrangement of the catalytic regions, unless stated otherwise.

The term "ceria-zirconia" as used herein may encompass a ceria-zirconia mixed oxide, i.e. a ceria-zirconia-based mixed oxide. As described herein, the ceria-zirconia mixed oxide may comprise additional dopants, but the ceria-zirconia mixed oxide may also consist of ceria and zirconia.

The term "supported on" in the context of "an alumina support material having at least one PGM supported thereon", for example, as used herein may encompass that the at least one PGM is directly in contact, and physically and/or chemically bound to the support material. However, in the context of PGMs being supported on alpha alumina, the term "supported on" does not encompass any "inaccessible" PGM atoms or particles that may have been supported on, for example, gamma alumina before the gamma alumina thermally decomposes to alpha alumina and encapsulates the PGM atoms or particles in the collapse of the high surface area material (i.e., incorporating the PGMs into the bulk of the alumina). In other words, on alpha alumina, a PGM is typically supported primarily on its outer surface. That is, without wishing to be bound by theory, when high surface area gamma alumina thermally decomposes at high temperatures, it may typically undergo a phase change to alpha alumina. PGM that is present in the pores of the high surface area gamma alumina at the time of the phase change may therefore be encapsulated into the bulk of the resulting alpha alumina, i.e., no longer being "supported on" the alpha alumina.

As will be appreciated, the term "alumina support material" may encompass a support material made of alumina.

As will be appreciated, the term "consists essentially of" or "consisting essentially of" as used herein may encompass that further components other than those listed may be present, provided that they do not materially affect the essential characteristics of the species or composition.

The term "zone" as used herein refers to a region having a length that is less than the total length of the substrate, such as ≤ 75 % of the total length of the substrate. A "zone" typically has a length (*i.e.* a substantially uniform length) of at least 5% (*e.g.* ≥ 5 %) of the total length of the substrate.

The total length of a substrate is the distance between its inlet end and its outlet end (*e.g.* the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:

(a) nearer to an inlet end (e.g. open end) of an inlet channel of the substrate than the zone is to a closed end (e.g. blocked or plugged end) of the inlet channel, and/or

(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:

(a) nearer to an outlet end (e.g. an open end) of an outlet channel of the substrate than the zone is to a closed end (e.g. blocked or plugged) of the outlet channel, and/or

(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "platinum group metals" or "PGMs" as used herein may encompass one or more elements selected from ruthenium, rhodium, palladium, osmium, iridium, and platinum. Preferably, the PGM comprises platinum, palladium, rhodium, or a mixture or alloy thereof. The PGMs may be in the form of an alloy.

The term "oxygen storage capacity material" or "OSC material" as used herein may encompass a material that can exhibit OSC properties, typically due to the presence of metal cations that may easily transition between oxidation states, such as the $Ce^{4+}/Ce^{3+}$ redox pair in ceria, for example. In other words, OSC materials may have the ability to liberate and/or absorb $O_2$ during air:fuel ratio perturbations. The functional requirements of OSC materials, in general, are known to the skilled person.

A way of defining the compositional balance between oxidising gases and reducing gases of exhaust gas is the lambda ($\lambda$) value of the exhaust gas, which can be defined according to equation (1) as:

$$\text{Actual engine air-to-fuel ratio/Stoichiometric engine air-to-fuel ratio,} \qquad (1)$$

wherein a lambda value of 1 represents a stoichiometrically balanced (or stoichiometric) exhaust gas composition, wherein a lambda value of >1 represents an excess of $O_2$ and $NO_x$ and the composition is described as "lean" and wherein a lambda value of <1 represents an excess of HC, $H_2$ and CO and the composition is described as "rich". It is also common in the art to refer to the air-to-fuel ratio at which the engine operates as "stoichiometric", "lean" or "rich", depending on the exhaust gas composition which the air-to-fuel ratio generates: hence stoichiometrically-operated gasoline engine or lean-burn gasoline engine.

The invention will now be described in relation to the following non-limiting examples.

Example 1 - rhodium-based catalysts

Catalyst Article 1A (Rh.gamma alumina):

The catalyst article consisted of a single washcoat layer on a cordierite substrate. The single washcoat layer contained binder, 2.0 g/ft$^3$ of Rh supported on gamma alumina having a BET surface area of 140 m$^2$/g, and a CeZrLaNd mixed oxide. The gamma alumina was present at a loading of 0.8 g/in$^3$ and the CeZrLaNd mixed oxide was also present at loading of 0.8 g/in$^3$.

Catalyst Article 1B (Rh.theta alumina):

The same method as for Catalyst Article 1A was used to manufacture Catalyst Article 1B, except that theta alumina having a BET surface area of 105 m$^2$/g was used in place of the gamma alumina.

Catalyst Article 1C (Rh.alpha alumina):

The same method as for Catalyst Article 1A was used to manufacture Catalyst Article 1C, except that alpha alumina having a BET surface area of 7 m$^2$/g was used in place of the gamma alumina.

The Rh was pre-fixed onto each alumina support material by hot hydrolysis method. Each catalyst article was then subjected to lean-oriented ageing at 1000°C for 4 hours. Unless otherwise specified, the "lean-oriented" ageing conditions include perturbations between "Stoich" (60 seconds) and "Lean" (60 seconds) gas conditions. The "Stoich" gas consists of 0.125% $C_3H_6$, 0.53% $O_2$, 10% $H_2O$, balanced with $N_2$. The "Lean" gas consists of 20% $O_2$, 10% $H_2O$, balanced with $N_2$.

Fresh and aged Catalyst Articles 1A-1C were tested under synthetic catalytic activity test (SCAT) conditions and the light-off temperature (T50) for each of THC, CO and $NO_x$ was measured. In particular, unless otherwise specified, the light-off tests were performed with a perturbed gas flow switched from rich (Lambda= 0.96) to lean (Lambda= 1.04) to rich (Lambda= 0.96) at a frequency of 1 Hz, with the gas composition consisting of 10 vol.% $H_2O$ + 14 vol.% $CO_2$ + 1200 ppm $C_3H_6$ + 0.7 vol.% $H_2$ + 0.5~2.28 vol.% CO + 0.49~1.28 vol.% $O_2$ + 500 ppm NO balanced with $N_2$. The tests were run from room temperature to 600 °C at a ramp rate of 25 °C/min, at a GHSV of 100,000 hr$^{-1}$.

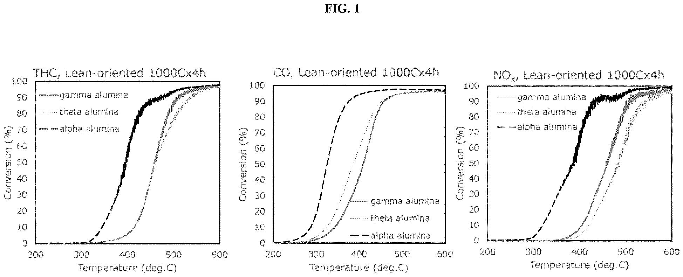

The fresh (i.e. fresh Catalyst Articles) results are shown in **Table 1** and the aged (i.e. Catalyst Articles after being subjected to lean-oriented ageing at 1000°C for 4 hours) results are shown in Table 2, the T50 values being in °C. The full aged results are also shown in **FIG. 1.**

**Table 1**

| Catalyst Article: | 1A | 1B | 1C |
|---|---|---|---|
| THC | 290.5 | 313.5 | 270 |

(continued)

| Catalyst Article: | 1A | 1B | 1C |
|---|---|---|---|
| CO | 253.5 | 267.5 | 230.5 |
| NO$_x$ | 278.5 | 303 | 253.5 |

Table 2

| Catalyst Article: | 1A | 1B | 1C |
|---|---|---|---|
| THC | 459 | 462 | 395 |
| CO | 409.5 | 386 | 325.5 |
| NO$_x$ | 459.5 | 483 | 386 |

As can be seen in **Tables 1 and 2** and in **FIG. 1,** for both the fresh and aged catalyst articles, Catalyst Article 1C containing alpha alumina has significantly lower T50 for each pollutant.

Example 2 - palladium-based catalysts

8 catalyst articles were manufactured in a similar manner to those of Example 1. The catalyst articles each consisted of a single washcoat layer on a cordierite substrate, the washcoat layer comprising 0.8 g/in$^3$ of an alumina support material, 0.8 g/in$^3$ of a CeZrYPr mixed oxide, palladium and 150 g/ft$^3$ of BaSO$_4$. The catalyst articles differed as set out in **Table 3.**

Table 3

| Catalyst Article | Type of alumina support material | Pd loading (g/ft$^3$) |
|---|---|---|
| 2A | La-doped alumina | 100 |
| 2B | Gamma alumina | 100 |
| 2C | Theta alumina | 100 |
| 2D | Alpha alumina | 100 |
| 2E | La-doped alumina | 10 |
| 2F | Gamma alumina | 10 |
| 2G | Theta alumina | 10 |
| 2H | Alpha alumina | 10 |

The La-doped alumina was conventional gamma alumina doped with 4.0 wt.% La. The gamma, theta and alpha alumina correspond to those used in Example 1.
Each catalyst article was then subjected to lean-oriented ageing at 1000°C for 4 hours and, separately, for 20 hours.

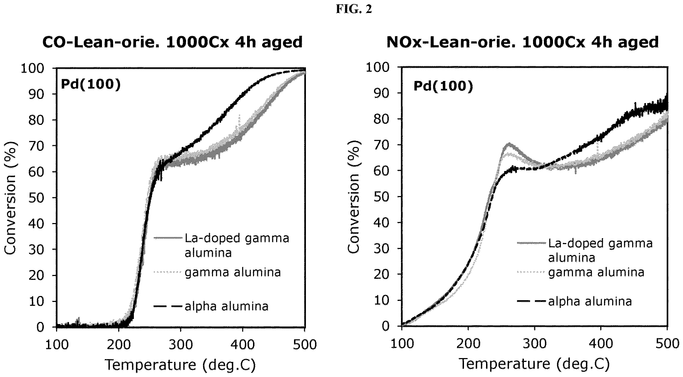

**FIG. 2** shows the CO and NO$_x$ conversion vs. temperature for Catalyst Articles 2A, 2B and 2D after the 4-hour ageing. As can be seen, Catalyst Article 2D shows higher conversion for both CO and NO$_x$ above about 300°C.

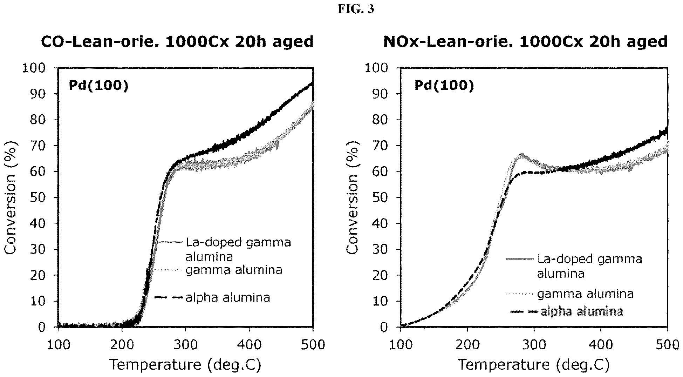

**FIG. 3** shows the CO and NO$_x$ conversion vs. temperature for Catalyst Articles 2A, 2B and 2D after the 20-hour ageing. As can be seen, Catalyst Article 2D still shows higher conversion for both CO and NO$_x$ above about 300°C.

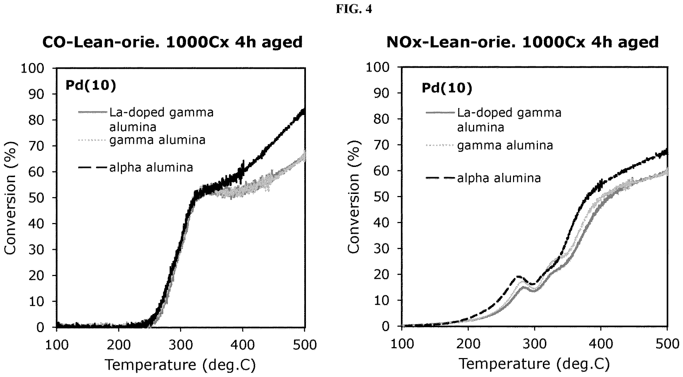

**FIG. 4** shows the CO and NO$_x$ conversion vs. temperature for Catalyst Articles 2E, 2F and 2H after the 4-hour ageing. As can be seen, Catalyst Article 2H shows higher conversion for both CO and NO$_x$ above about 300°C.

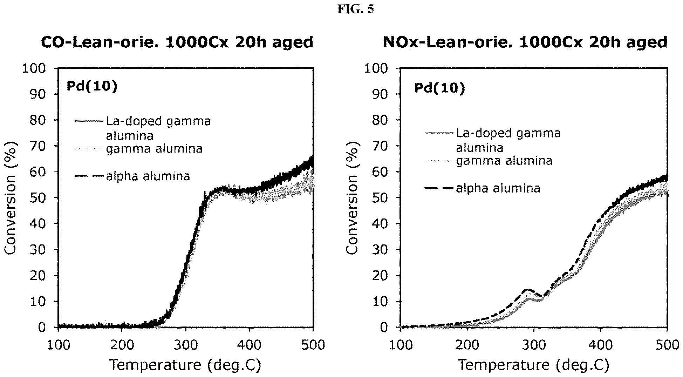

**FIG. 5** shows the CO and NO$_x$ conversion vs. temperature for Catalyst Articles 2E, 2F and 2H after the 20-hour ageing. As can be seen, Catalyst Article 2H still shows higher conversion for both CO and NO$_x$ above about 300°C.

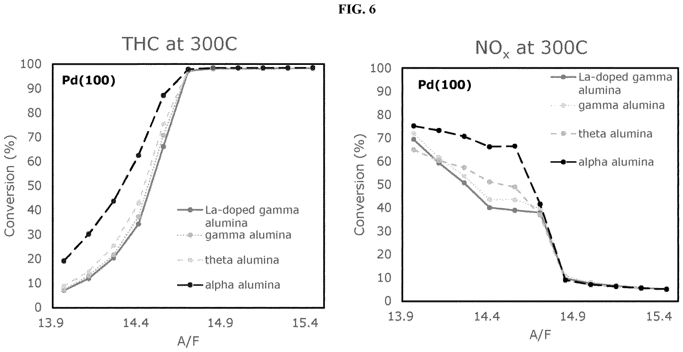

**FIG. 6** shows the THC and NO$_x$ conversion at 300°C vs. air: fuel ratio (A/F) for Catalyst Articles 2A-2D after the 4-hour ageing. As can be seen, Catalyst Article 2D shows higher conversion in rich conditions.

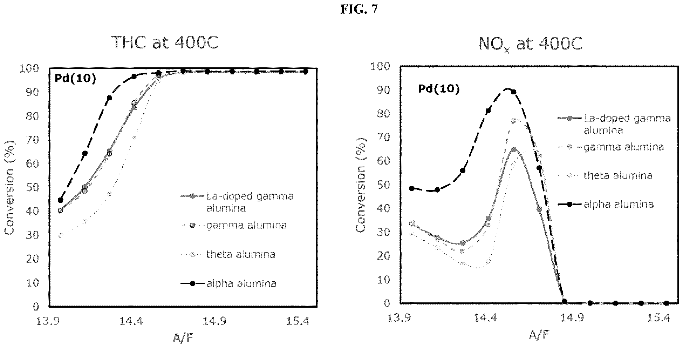

**FIG. 7** shows the THC and NO$_x$ conversion at 400°C vs. air:fuel (A/F) ratio for Catalyst Articles 2E-2H after the 4-hour ageing. As can be seen, Catalyst Article 2H shows higher conversion in rich conditions.

Example 3 - platinum-based catalysts

Catalyst Articles 3A, 3B, and 3C were manufactured in a similar manner to those of Example 1, except that a different CeZrLaNd mixed oxide was used, the Rh was replaced with 5 g/ft$^3$ of Pt and the Pt was not pre-fixed to the alumina. That is, Catalyst Article 3A contained a gamma alumina support material, Catalyst Article 3B contained a theta alumina support material and Catalyst Article 3C contained an alpha alumina support material.

Each of Catalyst Articles 3A-3C were subjected to an alternative lean-oriented ageing at 850°C for 4 hours and, separately, for 40 hours. In these conditions, the perturbations were between "Stoich" (300 seconds) and "Lean" (60 seconds) gas conditions. The "Stoich" gas was $N_2$. The "Lean" gas consisted of 20% $O_2$, balanced with $N_2$.

Catalyst Articles 3A-3C were tested under SCAT conditions and the $NH_3$ light-off temperature (T50) was measured. For the $NH_3$ light-off testing, firstly $NH_3$ was absorbed at 150°C for 10 minutes under 1000 ppm $NH_3$ with the balance $N_2$, before decreasing the temperature to 100°C and then increasing the temperature to 550°C under a gas consisting of 1000 ppm $NH_3$, 0.5% $O_2$ and the balance $N_2$.

The results are shown in **Table 4,** the T50 values being in °C.

**Table 4**

| Catalyst Article: | 3A | 3B | 3C |
|---|---|---|---|
| **Fresh** | 215 | 211 | 216 |
| **4-hour aged** | 180 | 183 | 163 |
| **40-hour aged** | 181 | 178 | 162 |

As can be seen in **Table 4,** the $NH_3$ T50 for the fresh catalyst articles are each comparable. The T50 for Catalyst Articles 3A and 3B are also comparable. However, the aged T50 for Catalyst Article 3C is significantly lower than for both Catalyst Articles 3A and 3B, after ageing for 4 hours and even 40 hours.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

**Claims**

1. A catalyst article for treating exhaust gas, the catalyst article comprising a substrate and at least a first catalytic region disposed on the substrate, wherein the first catalytic region comprises:

    an oxygen storage capacity (OSC) material; and
    an alumina support material having at least one platinum group metal (PGM) supported thereon;
    wherein the alumina support material comprises alpha alumina.

2. The catalyst article of claim 1, wherein the alumina support material consists essentially of, preferably consists of alpha alumina.

3. The catalyst article of claim 1 or claim 2, wherein the at least one PGM comprises Rh and the Rh is supported on the alumina support material in an amount of from 0.01 to 1 wt.%, preferably from 0.05 to 0.5 wt.%, more preferably from 0.1 to 0.4 wt.%, even more preferably from 0.015 to 0.35 wt.%, based on the total weight of the alumina support material and the Rh.

4. The catalyst article of any preceding claim, wherein the at least one PGM comprises Pd and the Pd is supported on the alumina support material in an amount of from 0.01 to 5 wt.%, preferably from 0.1 to 4 wt.%, more preferably from 0.5 to 3.5 wt.%, even more preferably from 1 to 3 wt.%, still more preferably from 1.1 to 2.5 wt.%, based on the total weight of the alumina support material and the Pd.

5. The catalyst article of any preceding claim, wherein the at least one PGM comprises Pt and the Pt is supported on the alumina support material in an amount of from 0.01 to 5 wt.%, preferably from 0.05 to 3 wt.%, more preferably from 0.1 to 1 wt.%, even more preferably from 0.12 to 0.5 wt.%, still more preferably from 0.14 to 0.3 wt.%, still more preferably from 0.16 to 0.20 wt.%, based on the total weight of the alumina support material and the Pt.

6. The catalyst article of any preceding claim, wherein the first catalytic region comprises from 1 to 50 wt.%, preferably from 5 to 40 wt.%, more preferably from 10 to 35 wt.%, even more preferably from 20 to 30 wt.% of the alumina support material, based on the total weight of the first catalytic region.

7. The catalyst article of any preceding claim, wherein the OSC material comprises ceria, preferably a ceria-zirconia mixed oxide.

8. The catalyst article of claim 7, wherein the ceria-zirconia mixed oxide comprises a doped ceria-zirconia mixed oxide.

9. The catalyst article of claim 8, wherein the doped ceria-zirconia mixed oxide is doped with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably an oxide of one or more of lanthanum, neodymium, yttrium and praseodymium.

10. The catalyst article of any preceding claim, wherein the catalyst article is a three-way catalyst article and the at least one PGM comprises Rh and/or Pd, preferably Rh.

11. The catalyst article of any preceding claim, wherein the catalyst article is an ammonia-slip catalyst and the at least one PGM comprises Pt and/or Pd, preferably Pt.

12. A method of manufacturing a catalyst article for treating exhaust gas, the method comprising:

    providing a substrate;
    providing a washcoat slurry comprising an OSC material, an alumina support material and at least one PGM, wherein the alumina support material comprises alpha alumina; and
    coating the substrate with the washcoat slurry to provide a catalyst article.

13. Use of alpha alumina as a support material for Rh in a catalyst article to reduce the total hydrocarbon (THC), CO and/or $NO_x$ light-off temperature of the catalyst article.

14. An emission treatment system comprising the catalyst article of any of claims 1 to 11.

15. A method of treating an exhaust gas, the method comprising:

    providing the catalyst article of any of claims 1 to 11; and
    contacting the catalyst article with an exhaust gas.

FIG. 1

FIG. 2

CO-Lean-orie. 1000Cx 4h aged

NOx-Lean-orie. 1000Cx 4h aged

FIG. 3

**CO-Lean-orie. 1000Cx 20h aged**

Pd(100)

Conversion (%) vs Temperature (deg.C)

Legend:
- La-doped gamma alumina
- gamma alumina
- alpha alumina

**NOx-Lean-orie. 1000Cx 20h aged**

Pd(100)

Conversion (%) vs Temperature (deg.C)

Legend:
- La-doped gamma alumina
- gamma alumina
- alpha alumina

FIG. 4

## CO-Lean-orie. 1000Cx 4h aged

## NOx-Lean-orie. 1000Cx 4h aged

FIG. 5

**CO-Lean-orie. 1000Cx 20h aged**

Pd(10)

La-doped gamma alumina
gamma alumina
alpha alumina

**NOx-Lean-orie. 1000Cx 20h aged**

Pd(10)

La-doped gamma alumina
gamma alumina
alpha alumina

**FIG. 6**

THC at 300C

Pd(100)

La-doped gamma alumina
gamma alumina
theta alumina
alpha alumina

NO$_x$ at 300C

Pd(100)

La-doped gamma alumina
gamma alumina
theta alumina
alpha alumina

FIG. 7

**EUROPEAN SEARCH REPORT**

Application Number

EP 24 19 5008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 339 794 B2 (N E CHEMCAT CORP [JP]) 17 May 2016 (2016-05-17) * claims; examples * ----- | 1-15 | INV. B01J21/04 B01D53/94 B01J23/40 |
| X | CN 101 653 730 B (NANJING YINGSIWEIER ENVIRONMEN; JIANGSU GAOCHUN CERAMICS CO LT ET AL.) 22 February 2012 (2012-02-22) * claims; examples * ----- | 1-15 | |

TECHNICAL FIELDS SEARCHED (IPC)

B01J
B01D

The present search report has been drawn up for all claims

| Place of search | Date of completion of the search | Examiner |
|---|---|---|
| The Hague | 21 January 2025 | Schoofs, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 5008

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | | Publication date | Patent family member(s) | | Publication date |
|---|---|---|---|---|---|
| US 9339794 | B2 | 17-05-2016 | CN | 104364011 A | 18-02-2015 |
| | | | JP | 6007248 B2 | 12-10-2016 |
| | | | JP | WO2014002667 A1 | 30-05-2016 |
| | | | US | 2015111727 A1 | 23-04-2015 |
| | | | WO | 2014002667 A1 | 03-01-2014 |
| CN 101653730 | B | 22-02-2012 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006257305 A1